# EUROPEAN PATENT APPLICATION

(11) **EP 4 836 109 A1**
(43) Date of publication of application: **04.11.2026**
(21) Application number: 24914541.8
(22) Date of filing: 02.01.2024
(51) Int. Cl.: H01M 50/15

(54) **BATTERY CELL, BATTERY AND ELECTRIC DEVICE**

(71) Applicant: Contemporary Amperex Technology Co., Limited, Ningde, Fujian 352100 (CN)
(72) Inventor: YANG, Kaihuan, Ningde, Fujian 352100 (CN); CHENG, Qi, Ningde, Fujian 352100 (CN); SU, Huasheng, Ningde, Fujian 352100 (CN); KE, Haibo, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2024/070224
(87) International publication number: WO 2025/145304

(57) **Abstract**

A battery cell (20), a battery (100), and an electric apparatus are provided, belonging to the field of battery technology. The battery cell (20) includes a housing (21) and an end cover (22). An accommodating cavity (211) is formed inside the housing (21). At least one end of the accommodating cavity (211) in a first direction (X) is provided with an opening (212). The accommodating cavity (211) is configured to accommodate an electrode assembly (23). The end cover (22) includes a first cover body (221) and a second cover body (222) stacked along the first direction (X). The first cover body (221) is connected to the housing (21) to seal the opening (212). Strength of the second cover body (222) is greater than strength of the first cover body (221). Setting the strength of the second cover body (222) to be greater than the strength of the first cover body (221) allows the end cover (22) of this structure to be provided with the second cover body (222) having higher strength on one side of the first cover body (221), thereby improving the overall structural strength of the end cover (22). Thus, when the end cover (22) has the same structural strength, the end cover (22) can be connected to the housing (21) through the first cover body (221), and the overall thickness of the first cover body (221) and second cover body (222) of the end cover (22) after stacked in the first direction (X) can be optimized.

## Description

### TECHNICAL FIELD

This application relates to the field of battery technology, and specifically, to a battery cell, a battery, and an electric apparatus.

### BACKGROUND

In recent years, new energy vehicles have experienced rapid development. In the field of electric vehicles, traction batteries serve as power sources of electric vehicles and play an irreplaceable important role. With the vigorous promotion of new energy vehicles, the demand for traction battery products is increasingly high. As core components of new energy vehicles, batteries have high requirements for their service performance. A battery cell of a battery typically includes an enclosure and an electrode assembly accommodated in the enclosure. However, the existing battery cell has low internal space utilization, which is not conducive to increasing the energy density of the battery.

### SUMMARY

Embodiments of this application provide a battery cell, a battery, and an electric apparatus, which can effectively increase the energy density of the battery cell.

According to a first aspect, an embodiment of this application provides a battery cell including a housing and an end cover, where an accommodating cavity is formed inside the housing; at least one end of the accommodating cavity in a first direction is provided with an opening; the accommodating cavity is configured to accommodate an electrode assembly; the end cover seals the opening; the end cover includes a first cover body and a second cover body stacked along the first direction; the first cover body is connected to the housing to seal the opening; and strength of the second cover body is greater than strength of the first cover body.

In the above technical solution, the end cover of the battery cell is provided with the first cover body and the second cover body stacked along the first direction, and the first cover body is configured to be connected to the housing such that the end cover seals the opening of the housing. Setting the strength of the second cover body to be greater than the strength of the first cover body allows the end cover of this structure to be provided with the second cover body having higher strength on one side of the first cover body, thereby improving the overall structural strength of the end cover. When the end cover has the same structural strength, the end cover can be connected to the housing through the first cover body, and the overall thickness of the first cover body and the second cover body of the end cover after stacked in the first direction can be optimized, thereby achieving the mutual assembly and connection between the end cover and the housing while satisfying the structural strength of the end cover, and effectively improving the space utilization of the battery cell to increase the energy density of the battery cell.

In some embodiments, the strength of the first cover body is T₁, and the strength of the second cover body is T₂, satisfying T₂ - T₁ ≥ 150 MPa.

In the above technical solution, setting the strength of the second cover body to be at least 150 MPa greater than the strength of the first cover body can improve the strength of the second cover body when the first cover body is connected to the housing, thereby further reducing the space occupied by the first cover body and the second cover body in the first direction when the end cover has the same structural strength, and helping to improve the space utilization of the battery cell to increase the energy density of the battery cell.

In some embodiments, along the first direction, the first cover body has a first surface facing the second cover body; a first abutting portion is disposed on the first surface in a protruding manner, where the first abutting portion surrounds an outer side of the second cover body; and an outer peripheral surface of the first abutting portion abuts against an inner peripheral surface of the housing.

In the above technical solution, the first abutting portion is disposed on the first surface of the first cover body in a protruding manner, the outer peripheral surface of the first abutting portion abuts against the inner peripheral surface of the housing, and the first abutting portion is a structure surrounding the outer side of the second cover body, so that the end cover of this structure can further increase a contact area between the first cover body and the housing without increasing the thickness of the first cover body and the second cover body stacked with each other, thereby helping to improve the structural stability and reliability of the end cover assembled to the housing through the first cover body.

In some embodiments, an outer peripheral surface of the second cover body abuts against an inner peripheral surface of the first abutting portion.

In the above technical solution, the outer peripheral surface of the second cover body is configured as a structure abutting against the inner peripheral surface of the first abutting portion, so that the structural stability of the second cover body assembled to an inner side of the first abutting portion can be improved, and the second cover body can also provide certain support for the first abutting portion, thereby improving the structural stability of the outer peripheral surface of the first abutting portion abutting against the inner peripheral surface of the housing, and helping to alleviate the phenomenon of deformation of the first abutting portion.

In some embodiments, along the first direction, the second cover body has a second surface facing away from the first cover body; a second abutting portion is disposed on the second surface in a protruding manner, where the second abutting portion is an annular structure extending along a circumferential direction of the first abutting portion; and an outer peripheral surface of the second abutting portion abuts against the inner peripheral surface of the first abutting portion.

In the above technical solution, the second abutting portion of the annular structure is disposed on the second surface of the second cover body in a protruding manner, and the outer peripheral surface of the second abutting portion abuts against the inner peripheral surface of the first abutting portion, so that a contact area between the second cover body and the inner peripheral surface of the first abutting portion can be increased through the second abutting portion without increasing the thickness of the first cover body and the second cover body stacked with each other, thereby further improving the supporting effect of the second cover body on the first abutting portion, further improving the structural stability of the outer peripheral surface of the first abutting portion abutting against the inner peripheral surface of the housing, and further alleviating the phenomenon of deformation of the first abutting portion.

In some embodiments, along the first direction, the first abutting portion has a first end surface facing away from the first surface, the second abutting portion has a second end surface facing away from the second surface, and the second end surface is flush with the first end surface.

In the above technical solution, the first end surface of the first abutting portion facing away from the first surface is configured as a structure flush with the second end surface of the second abutting portion facing away from the second surface, so that a contact area between the first abutting portion and the second abutting portion can be further increased, thereby improving the supporting effect of the second cover body on the first abutting portion. In addition, the phenomenon of space waste of the battery cell caused by the second abutting portion protruding from the first end surface can be effectively alleviated.

In some embodiments, the second cover body and the second abutting portion are integrally formed.

In the above technical solution, the second cover body and the second abutting portion are configured to be integrally formed, helping to improve the structural strength and structural stability between the second cover body and the second abutting portion, thereby reducing the risk of mutual separation between the second abutting portion and the second cover body.

In some embodiments, the inner peripheral surface of the first abutting portion is parallel to the first direction.

In the above technical solution, the inner peripheral surface of the first abutting portion is configured as a structure parallel to the first direction, facilitating the assembly of the second cover body to the inner side of the first abutting portion along the first direction, helping an outer peripheral surface of the first cover body to abut against the inner peripheral surface of the first abutting portion, and helping to reduce the assembly difficulty between the second cover body and the first cover body, thereby improving the production efficiency of the battery cell.

In some embodiments, the outer peripheral surface of the first cover body abuts against the inner peripheral surface of the housing.

In the above technical solution, the outer peripheral surface of the first cover body abuts against the inner peripheral surface of the housing, so that the outer peripheral surfaces of the first cover body and the first abutting portion are both structures abutting against the inner peripheral surface of the housing, thereby further improving the stability and reliability of the mutual assembly and connection between the first cover body and the housing.

In some embodiments, the outer peripheral surface of the first cover body is flush with the outer peripheral surface of the first abutting portion; the outer peripheral surface of the first cover body and the outer peripheral surface of the first abutting portion jointly form a welding surface; and the welding surface is welded to the inner peripheral surface of the housing.

In the above technical solution, the outer peripheral surface of the first cover body and the outer peripheral surface of the first abutting portion are set to be flush with each other and jointly define the welding surface welded to the inner peripheral surface of the housing, so that the end cover is a structure in which the first cover body and the first abutting portion surrounding the outer side of the second cover body are both welded to the housing, thereby effectively increasing a welding area between the end cover and the housing, and allowing the first cover body of the end cover with reduced thickness to have a sufficient area welded to the housing. Thus, when the end cover has the same strength, an area of a connection region between the first cover body of the end cover and the housing can be met, and the thickness of the first cover body and second cover body of the end cover stacked in the first direction can be optimized, thereby improving the reliability of a connection interface between the end cover and the housing and effectively improving the space utilization of the battery cell while satisfying the structural strength of the end cover.

In some embodiments, along the first direction, an end of the housing provided with the opening is provided with a third end surface, and the third end surface is connected to the inner peripheral surface of the housing; where along the first direction, the third end surface faces the first surface, and the third end surface is connected to the first surface.

In the above technical solution, the third end surface of the housing and the first surface of the first cover body are configured as structures facing each other and connected to each other, so that an outer edge of the first cover body is a structure protruding from the outer peripheral surface of the first abutting portion. This allows the end cover to abut against the inner peripheral surface of the housing through the first abutting portion and be connected to the third end surface of the housing through the first surface of the first cover body, thereby allowing the end cover to be in contact with the housing in multiple different directions, and helping to further improve the assembly reliability and structural stability between the end cover and the housing.

In some embodiments, the third end surface is welded to the first surface.

In the above technical solution, the third end surface of the housing and the first surface of the first cover body are welded to each other, so that a portion of the outer edge of the first cover body protruding from the outer peripheral surface of the first abutting portion is a structure welded to the housing, thereby helping to improve the connection strength between the first cover body and the housing.

In some embodiments, the first cover body and the first abutting portion are integrally formed.

In the above technical solution, the first cover body and the first abutting portion are configured to be integrally formed. This can effectively improve the structural strength and structural stability between the first cover body and the first abutting portion, thereby reducing the risk of mutual separation between the first abutting portion and the first cover body. In addition, this helps to configure the first cover body and the first abutting portion as structures made of a same material, thereby facilitating the welding connection of the first cover body and the first abutting portion to the housing.

In some embodiments, along the first direction, the second cover body is located on a side of the first cover body facing the accommodating cavity.

In the above technical solution, the second cover body is configured to be located on the side of the first cover body facing the accommodating cavity, so that the second cover body is a structure located on an inner side of the first cover body, thereby thinning the second cover body after the first cover body is connected to the housing to reduce the space occupied by the end cover inside the battery cell, and helping to improve the internal space utilization of the battery cell.

In some embodiments, along the first direction, the second cover body is located on a side of the first cover body facing away from the accommodating cavity.

In the above technical solution, the second cover body is configured to be located on the side of the first cover body facing away from the accommodating cavity, so that the second cover body is a structure located on an outer side of the first cover body, thereby facilitating the assembly of the second cover body to the first cover body, and reducing the interference of the second cover body on other components inside the battery cell after the first cover body is connected to the housing.

In some embodiments, the first cover body is welded to the housing.

In the above technical solution, the first cover body and the housing are configured as structures welded to each other, helping to improve the connection strength between the first cover body and the housing, thereby effectively improving the structural stability and reliability of the end cover assembled to the housing.

In some embodiments, a material of the first cover body is the same as a material of the housing.

In the above technical solution, setting the material of the first cover body to be the same as the material of the housing allows the first cover body and the housing to be structures made of the same material and welded to each other. This can reduce the welding difficulty between the first cover body and the housing, and also reduce the phenomena such as poor welding or welding failure between the first cover body and the housing, thereby helping to improve the welding quality between the first cover body and the housing.

In some embodiments, the material of the first cover body includes aluminum or aluminum alloy, and a material of the second cover body includes steel.

In the above technical solution, setting the material of the first cover body to aluminum or aluminum alloy and correspondingly setting the material of the second cover body to steel can reduce the manufacturing cost of the end cover and allow the strength of the second cover body to be much higher than the strength of the first cover body, thereby further optimizing the thickness of the first cover body and the second cover body stacked along the first direction when the end cover has the same structural strength, and helping to further improve the space utilization of the battery cell.

In some embodiments, the first cover body and the second cover body are compositely connected to each other.

In the above technical solution, the first cover body and the second cover body are connected to each other through a composite connection structure, so that the structural strength and connection stability of the first cover body and the second cover body can be effectively improved, thereby helping to reduce the risk of mutual separation between the first cover body and the second cover body.

According to a second aspect, an embodiment of this application further provides a battery including the above battery cell.

According to a third aspect, an embodiment of this application further provides an electric apparatus including the above battery cell, where the battery cell is configured to provide electrical energy.

### BRIEF DESCRIPTION OF DRAWINGS

To describe the technical solutions in the embodiments of this application more clearly, the following briefly describes the accompanying drawings required for describing the embodiments. It should be appreciated that the accompanying drawings below show merely some embodiments of this application and thus should not be considered as limitations on the scope. Those of ordinary skill in the art may still derive other related accompanying drawings from the accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a schematic structural diagram of a battery cell according to some embodiments of this application;
FIG. 4 is an exploded view of a structure of a battery cell according to some embodiments of this application;
FIG. 5 is a cross-sectional view of an end cover of a battery cell according to some embodiments of this application;
FIG. 6 is a partially enlarged view of part A of the end cover shown in FIG. 5;
FIG. 7 is a partial cross-sectional view of a battery cell according to some embodiments of this application;
FIG. 8 is a cross-sectional view of an end cover of a battery cell according to some other embodiments of this application;
FIG. 9 is a partially enlarged view of part B of the end cover shown in FIG. 8;
FIG. 10 is a partial cross-sectional view of a battery cell according to some other embodiments of this application;
FIG. 11 is a cross-sectional view of an end cover of a battery cell according to still some other embodiments of this application;
FIG. 12 is a partially enlarged view of part C of the end cover shown in FIG. 11;
FIG. 13 is a partial cross-sectional view of a battery cell according to still some other embodiments of this application;
FIG. 14 is a cross-sectional view of an end cover of a battery cell according to yet some other embodiments of this application;
FIG. 15 is a partially enlarged view of part D of the end cover shown in FIG. 14; and
FIG. 16 is a partial cross-sectional view of a battery cell according to yet some other embodiments of this application.

Reference signs: 1000. vehicle; 100. battery; 10. box; 11. first box body; 12. second box body; 20. battery cell; 21. housing; 211. accommodating cavity; 212. opening; 213. third end surface; 22. end cover; 221. first cover body; 2211. first surface; 2212. first abutting portion; 2212a. first end surface; 2213. welding surface; 222. second cover body; 2221. second surface; 2222. second abutting portion; 2222a. second end surface; 23. electrode assembly; 231. tab; 24. electrode terminal; 25. current collecting member; 26. pressure relief mechanism; 200. controller; 300. motor; and X. first direction.

### DESCRIPTION OF EMBODIMENTS

To make the objectives, technical solutions, and advantages of the embodiments of this application clearer, the technical solutions in the embodiments of this application will be clearly described below with reference to the accompanying drawings in the embodiments of this application. Apparently, the described embodiments are only some embodiments of this application, rather than all of the embodiments. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those of ordinary skill in the art to which this application belongs. The terms used in the specification of this application are only for the purpose of describing specific embodiments and are not intended to limit this application. The terms "include", "comprise", "have", and any variations thereof in the specification and claims of this application and the above description of the drawings are intended to cover non-exclusive inclusions. The terms "first", "second", and the like in the specification and claims of this application or the above drawings are used to distinguish different objects, rather than to describe a specific order or primary-secondary relationship.

Reference to "embodiment" in this application means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise clearly specified and limited, the terms "mounting", "connection", "join", and "attachment" should be understood in a broad sense. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific circumstances.

The term "and/or" in this application is merely an association relationship describing associated objects, indicating that three relationships may exist. For example, A and/or B may indicate the following three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated apparatuses in the embodiments of this application are merely for illustrative purposes and should not constitute any limitations on this application.

In this application, "a plurality of" refers to two or more (including two).

In the embodiments of this application, the battery cell may be a secondary battery. The secondary battery refers to a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of this application.

A battery cell typically includes an electrode assembly. The electrode assembly includes a positive electrode, a negative electrode, and a separator. During the charging and discharging of the battery cell, active ions (for example, lithium ions) are intercalated and deintercalated back and forth between the positive electrode and the negative electrode. The separator is disposed between the positive electrode and the negative electrode to prevent short circuits between the positive and negative electrodes and to allow active ions to pass through.

In some embodiments, the positive electrode may be a positive electrode sheet. The positive electrode sheet may include a positive electrode current collector and a positive electrode active material provided on at least one surface of the positive electrode current collector.

As an example, the positive electrode current collector has two opposite surfaces in its thickness direction. The positive electrode active material is provided on either or both of the two opposite surfaces of the positive electrode current collector.

As an example, the positive electrode current collector may adopt a metal foil or a composite current collector. For example, as the metal foil, aluminum with silver-plated surface, stainless steel with silver-plated surface, stainless steel, copper, aluminum, nickel, carbon electrode, carbon, nickel, titanium, or the like can be used. The composite current collector may include a polymer material substrate and a metal layer. The composite current collector can be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to these materials, and other conventional materials that can be used as battery positive electrode active materials can also be used. These positive electrode active materials can be used alone or in combination of two or more. An example of the lithium-containing phosphate may include but is not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. An example of the lithium transition metal oxide may include but is not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), or LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and modified compounds thereof.

In some embodiments, the positive electrode may adopt foam metal. The foam metal may be foam nickel, foam copper, foam aluminum, foam alloy, or the like. When the foam metal serves as the positive electrode, the surface of the foam metal may be not provided with a positive electrode active material, or certainly may be provided with a positive electrode active material. As an example, the foam metal may also be filled and/or deposited with a lithium source material, potassium metal, or sodium metal, where the lithium source material is lithium metal and/or a lithium-rich material.

In some embodiments, the negative electrode may be a negative electrode sheet, and the negative electrode sheet may include a negative electrode current collector.

As an example, the negative electrode current collector may adopt a metal foil, foam metal, or a composite current collector. For example, as the metal foil, aluminum or stainless steel with silver-plated surface, stainless steel, copper, aluminum, nickel, carbon electrode, nickel, titanium, or the like can be used. The foam metal may be foam nickel, foam copper, foam aluminum, foam alloy, or the like. The composite current collector may include a polymer material substrate and a metal layer. The composite current collector can be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the negative electrode sheet may include a negative electrode current collector and a negative electrode active material provided on at least one surface of the negative electrode current collector.

As an example, the negative electrode current collector has two opposite surfaces in its thickness direction. The negative electrode active material is provided on either or both of the two opposite surfaces of the negative electrode current collector.

As an example, the negative electrode active material may adopt a negative electrode active material for battery cells well known in the art. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as battery negative electrode active materials can also be used. These negative electrode active materials can be used alone or in combination of two or more.

In some embodiments, a material of the positive electrode current collector may be aluminum, and a material of the negative electrode current collector may be copper.

In some embodiments, the electrode assembly further includes a separator. The separator is disposed between the positive electrode and the negative electrode.

In some embodiments, the separator is a separation film. The separation film may be of various types, and any well-known porous separation film with good chemical stability and mechanical stability can be selected.

As an example, a material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, materials of the layers may be the same or different. The separator may be a separate component located between the positive and negative electrodes or attached to the surfaces of the positive and negative electrodes.

In some embodiments, the separator is a solid-state electrolyte. The solid-state electrolyte is provided between the positive electrode and the negative electrode to transmit ions and separate the positive electrode from the negative electrode.

In some embodiments, the battery cell further includes an electrolyte. The electrolyte functions to conduct ions between the positive and negative electrodes. The electrolyte may be in a liquid state, a gel state, or a solid state. The liquid-state electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel-state electrolyte includes a polymer serving as a skeleton network of the electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, a sodium superionic conductor, garnet, or an amorphous LiPON film), a sulfide solid electrolyte (a crystalline lithium superionic conductor (lithium germanium phosphorus sulfur or argyrodite), or amorphous sulfide), a halide solid electrolyte, a nitride solid electrolyte, and a hydride solid electrolyte.

As an example, the composite solid-state electrolyte is formed by adding an inorganic solid-state electrolyte filler to a polymer solid electrolyte.

In some embodiments, the electrode assembly is a wound structure. The positive electrode sheet and the negative electrode sheet are wound into a wound structure.

In some embodiments, the electrode assembly is a laminated structure.

As an example, a plurality of positive electrode sheets and a plurality of negative electrode sheets may be provided, and the plurality of positive electrode sheets and the plurality of negative electrode sheets are alternately stacked.

As an example, a plurality of positive electrode sheets may be provided, the negative electrode sheet is folded to form a plurality of stacked folding sections, and one positive electrode sheet is sandwiched between adjacent folding sections.

As an example, both the positive electrode sheet and the negative electrode sheet are folded to form a plurality of stacked folding sections.

As an example, a plurality of separators may be provided and respectively disposed between any adjacent positive electrode sheets or negative electrode sheets.

As an example, the separators may be consecutively disposed, which are disposed between any adjacent positive electrode sheets or negative electrode sheets by folding or winding.

In some embodiments, the electrode assembly may be in a cylindrical shape, a flat shape, a polygonal prism shape, or the like.

In some embodiments, the electrode assembly is provided with a tab, and the tab can lead current out from the electrode assembly. The tab includes a positive tab and a negative tab.

In some embodiments, the battery cell may include an enclosure. The enclosure is configured to encapsulate components such as the electrode assembly and the electrolyte.

As an example, the battery cell may be a cylindrical battery cell, a prismatic battery cell, a pouch battery cell, or a battery cell of another shape, where the prismatic battery cell includes but is not limited to a square shell battery cell, a blade-shaped battery cell, a polygonal prismatic battery. The polygonal prismatic battery is, for example, a hexagonal prism battery.

The battery mentioned in the embodiments of this application refers to a single physical module that includes one or more battery cells to provide higher voltage and capacity.

In some embodiments, the battery may be a battery module. When a plurality of battery cells are provided, the plurality of battery cells are arranged and fixed to form a battery module.

In some embodiments, the battery may be a battery pack. The battery pack includes a box and a battery cell, and the battery cell or battery module is accommodated in the box.

In some embodiments, the box may be a part of a chassis structure of a vehicle. For example, a part of the box may become at least part of a floor of the vehicle, or a part of the box may become at least part of a cross beam and longitudinal beam of the vehicle.

In some embodiments, the battery may be an energy storage apparatus. The energy storage apparatus includes an energy storage container, an energy storage cabinet, and the like.

Batteries have outstanding advantages such as high energy density, low environmental pollution, high power density, long service life, wide application range, and low self-discharge rate, and serve as an important part of the development of new energy at present. The development of battery technology requires consideration of multiple design factors at the same time, such as performance parameters including energy density, cycle life, discharge capacity, and charge-discharge rate, and also requires consideration of the safety of the batteries.

For a general battery cell, the battery cell typically includes an enclosure and an electrode assembly accommodated in the enclosure. The enclosure includes a housing and an end cover. An accommodating cavity having an opening is formed inside the housing. The accommodating cavity is configured to accommodate the electrode assembly. The end cover covers the opening and is connected to the housing. To reduce the assembly difficulty and improve the assembly quality, in the related art, a material of the end cover is typically set to be the same as a material of the housing, and the end cover is welded to the housing to seal the opening of the housing. However, to improve the structural strength of the end cover and ensure the welding reliability between the end cover and the housing, the thickness of the end cover needs to be increased, which results in a large space occupied by the end cover. This leads to low internal space utilization of the battery cell and is not conducive to increasing the energy density of the battery cell.

Based on the above considerations, to solve the problem of low internal space utilization of the battery cell, an embodiment of this application provides a battery cell. The battery cell includes a housing and an end cover. An accommodating cavity is formed inside the housing. At least one end of the accommodating cavity in a first direction is provided with an opening. The accommodating cavity is configured to accommodate an electrode assembly. The end cover seals the opening. The end cover includes a first cover body and a second cover body stacked along the first direction. The first cover body is connected to the housing to seal the opening. Strength of the second cover body is greater than strength of the first cover body.

In the battery cell of this structure, the end cover of the battery cell is provided with the first cover body and the second cover body stacked along the first direction, and the first cover body is configured to be connected to the housing such that the end cover seals the opening of the housing. Setting the strength of the second cover body to be greater than the strength of the first cover body allows the end cover of this structure to be provided with the second cover body having higher strength on one side of the first cover body, thereby improving the overall structural strength of the end cover. When the end cover has the same structural strength, the end cover can be connected to the housing through the first cover body, and the overall thickness of the first cover body and the second cover body of the end cover after stacked in the first direction can be optimized, thereby achieving the mutual assembly and connection between the end cover and the housing while satisfying the structural strength of the end cover, and effectively improving the space utilization of the battery cell to increase the energy density of the battery cell.

The battery cell disclosed in this embodiment of this application can be used, but is not limited to being used, in electric apparatuses such as vehicles, ships, or aircraft. The battery cell, the battery, and the like disclosed in this application may be used to constitute a power supply system of the electric apparatus. This helps to alleviate the problem of low internal space utilization of the battery cell, thereby increasing the energy density of the battery cell.

An embodiment of this application provides an electric apparatus using a battery as a power source. The electric apparatus may be but is not limited to a mobile phone, a tablet, a notebook computer, an electric toy, an electric tool, an electric bicycle, an electric vehicle, a ship, an aerospace vehicle, or the like. The electric toy may include a fixed or mobile electric toy, such as a game console, an electric toy car, an electric toy ship, or an electric toy airplane. The aerospace vehicle may include an airplane, a rocket, a space shuttle, a spaceship, and the like.

For ease of description, an electric apparatus according to an embodiment of this application being a vehicle is used as an example for description of the following embodiments.

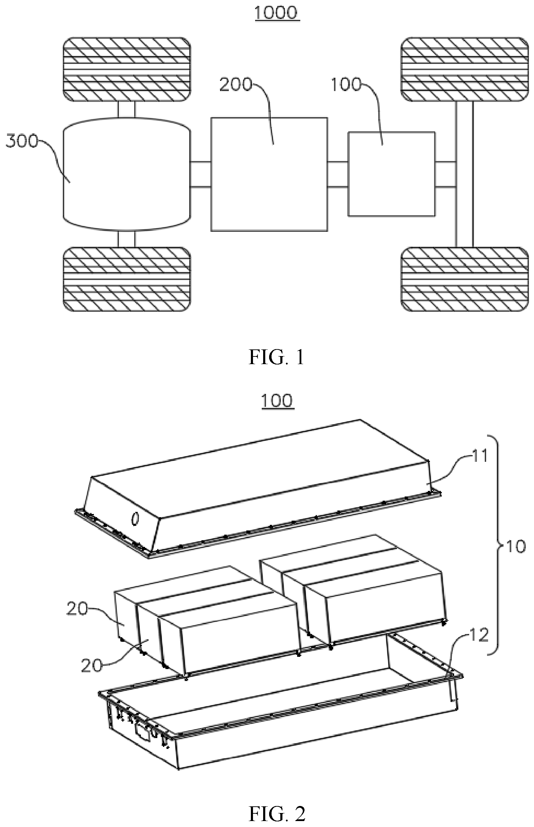

Referring to FIG. 1, FIG. 1 is a schematic structural diagram of a vehicle 1000 according to some embodiments of this application. The vehicle 1000 may be a fossil fuel vehicle, a gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom of the vehicle 1000, or at the head of the vehicle 1000, or at the tail of the vehicle 1000. The battery 100 may be configured to supply power to the vehicle 1000. For example, the battery 100 may serve as an operating power source or a usage power source of the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 can not only serve as an operating power source or a usage power source of the vehicle 1000, but also as a driving power source of the vehicle 1000, replacing or partially replacing fossil fuel or natural gas to provide driving power for the vehicle 1000.

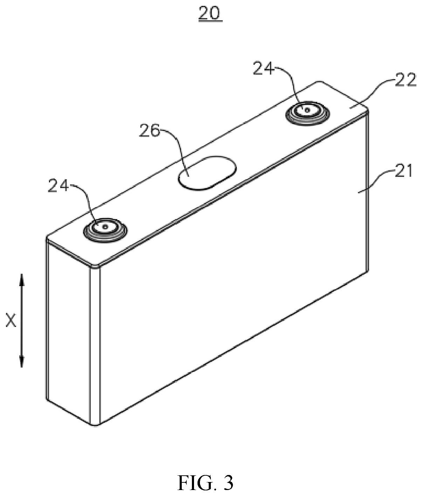

Referring to FIGs. 2 and 3, FIG. 2 is an exploded view of a structure of a battery 100 according to some embodiments of this application, and FIG. 3 is a schematic structural diagram of a battery cell 20 according to some embodiments of this application. The battery 100 includes a box 10 and a battery cell 20. The battery cell 20 is configured to be accommodated in the box 10.

The box 10 is configured to provide an assembly space for the battery cell 20, and the box 10 may adopt various structures. In some embodiments, the box 10 may include a first box body 11 and a second box body 12. The first box body 11 and the second box body 12 fit each other, so that the first box body 11 and the second box body 12 jointly define an assembly space for accommodating the battery cell 20. The second box body 12 may be a hollow structure with an opening at one end. The first box body 11 may be a plate-like structure. The first box body 11 covers an opening side of the second box body 12, so that the first box body 11 and the second box body 12 jointly define the assembly space. Alternatively, the first box body 11 and the second box body 12 may each be a hollow structure with an opening on one side. The opening side of the first box body 11 is engaged with the opening side of the second box body 12.

Certainly, the box 10 formed by the first box body 11 and the second box body 12 may be of various shapes, such as a cylinder, a cuboid, or a cube. Exemplarily, in FIG. 2, the shape of the box 10 is a cuboid.

In the battery 100, one or more battery cells 20 may be disposed in the box 10. When a plurality of battery cells 20 are disposed in the box 10, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety formed by the plurality of battery cells 20 is accommodated in the box 10; or certainly, the battery 100 may alternatively be formed by a plurality of battery cells 20 being connected in series, parallel or series-parallel first to form a battery module and then a plurality of battery modules being connected in series, parallel, or series-parallel to form an entirety which is accommodated in the box 10.

In some embodiments, the battery 100 may further include another structure. For example, the battery 100 may further include a busbar. The busbar is configured to connect a plurality of battery cells 20, so as to achieve an electrical connection between the plurality of battery cells 20. The busbar functions to connect the plurality of battery cells 20 in series, parallel, or series-parallel. A material of the busbar may be copper, iron, aluminum, steel, aluminum alloy, or the like.

Each battery cell 20 may be a secondary battery or a primary battery, or may be a lithium-sulfur battery, a sodium-ion battery, or a magnesium-ion battery, but is not limited thereto. The battery cell 20 may be of a cuboid shape, a cylinder shape, a prism shape, or other shapes. Exemplarily, in FIG. 3, the battery cell 20 is a cuboid structure.

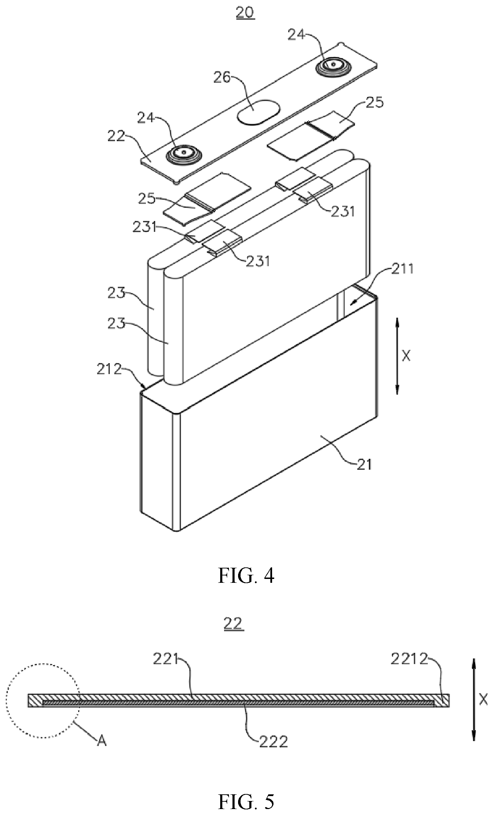

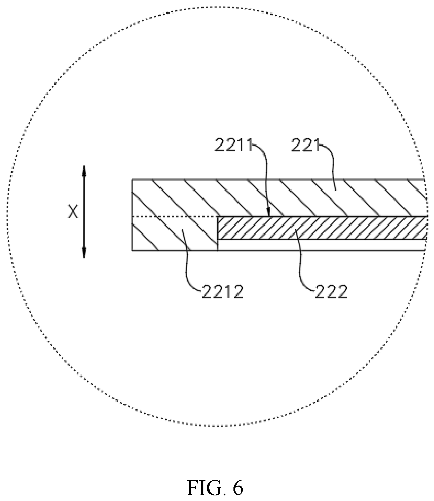

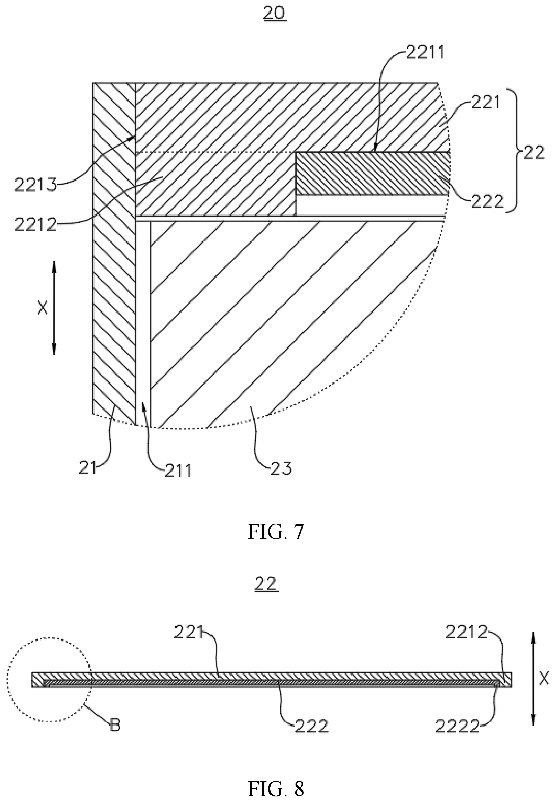

According to some embodiments of this application, referring to FIG. 3, and further referring to FIGs. 4, 5, 6, and 7, FIG. 4 is an exploded view of a structure of a battery cell 20 according to some embodiments of this application, FIG. 5 is a cross-sectional view of an end cover 22 of a battery cell 20 according to some embodiments of this application, FIG. 6 is a partially enlarged view of part A of the end cover 22 shown in FIG. 5, and FIG. 7 is a partial cross-sectional view of a battery cell 20 according to some embodiments of this application. This application provides a battery cell 20. The battery cell 20 includes a housing 21 and an end cover 22. An accommodating cavity 211 is formed inside the housing 21. At least one end of the accommodating cavity 211 in a first direction X is provided with an opening 212. The accommodating cavity 211 is configured to accommodate an electrode assembly 23. The end cover 22 seals the opening 212. The end cover 22 includes a first cover body 221 and a second cover body 222 stacked along the first direction X. The first cover body 221 is connected to the housing 21 to seal the opening 212. Strength of the second cover body 222 is greater than strength of the first cover body 221.

The battery cell 20 may further include an electrode assembly 23. The electrode assembly 23 is accommodated in the accommodating cavity 211 of the housing 21. The electrode assembly 23 is a component in the battery cell 20 where electrochemical reactions occur. The electrode assembly 23 may adopt various structures. For example, the electrode assembly 23 may be a wound structure formed by winding a positive electrode sheet, a separator, and a negative electrode sheet, or a stacked structure formed by stacking a positive electrode sheet, a separator, and a negative electrode sheet.

Exemplarily, the separator is a separation film. A main material of the separation film may be selected from at least one of glass fiber, non-woven fabric, polyethylene, polypropylene, and polyvinylidene fluoride.

Optionally, one or more electrode assemblies 23 may be accommodated in the accommodating cavity 211 of the housing 21. Exemplarily, in FIG. 4, the housing 21 of the battery cell 20 is internally provided with two electrode assemblies 23. The two electrode assemblies 23 are stacked along a thickness direction, that is, the two electrode assemblies 23 are stacked along a thickness direction of the battery cell 20. Certainly, in another embodiment, one, three, four, five, six, seven, eight, or more electrode assemblies 23 may be accommodated in the accommodating cavity 211 of the housing 21.

Optionally, the enclosure formed by the housing 21 and the end cover 22 may also be configured to accommodate an electrolyte, such as a liquid electrolyte. The enclosure formed by the housing 21 and the end cover 22 may be of various structural forms, such as a cylinder or a cuboid. Similarly, the housing 21 may also be made of various materials, such as aluminum or aluminum alloy.

The accommodating cavity 211 is formed inside the housing 21, and the at least one end of the accommodating cavity 211 in the first direction X is provided with the opening 212. That is, the housing 21 is a hollow structure with the opening 212 formed on the at least one end in the first direction X. The housing 21 may be provided with the opening 212 at one end in the first direction X, or provided with the opening 212 at each of two ends in the first direction X. Exemplarily, in FIG. 4, the housing 21 is provided with the opening 212 at only one end in the first direction X, and the end cover 22 covers the opening 212 of the housing 21 and forms a sealed connection to form a sealed space for accommodating the electrode assembly 23 and the electrolyte.

The end cover 22 includes the first cover body 221 and the second cover body 222 stacked along the first direction X, that is, the end cover 22 is provided with the first cover body 221 and the second cover body 222 stacked and connected along the first direction X. It should be noted that in the first cover body 221 and the second cover body 222 stacked in the first direction X, the second cover body 222 may be located on a side of the first cover body 221 facing the accommodating cavity 211, or the second cover body 222 may be located on a side of the first cover body 221 facing away from the accommodating cavity 211.

Various connection structures may be provided between the first cover body 221 and the second cover body 222, such as bonding, bolt connection, composite connection, or welding connection. Exemplarily, in an embodiment of this application, the first cover body 221 and the second cover body 222 are compositely connected to each other, such as by hot pressing or cold pressing.

The first cover body 221 is connected to the housing 21 to seal the opening 212, that is, the first cover body 221 of the end cover 22 functions to be connected to the housing 21 and seal the opening 212 of the housing 21.

The strength of the second cover body 222 is greater than the strength of the first cover body 221, that is, the metal material strength of the second cover body 222 is greater than the metal material strength of the second cover body 222. It should be noted that the strength of the first cover body 221 and the strength of the second cover body 222 refer to the mechanical properties of the engineering materials of the first cover body 221 and the second cover body 222 that indicate resistance to fracture and excessive deformation. When it is necessary to obtain the strength of the first cover body 221 and the strength of the second cover body 222, a static load test can be used to test the strength of the first cover body 221 and the strength of the second cover body 222 so as to obtain the strength of the first cover body 221 and the strength of the second cover body 222.

The first cover body 221 functions to be connected to the housing 21. Exemplarily, the material of the first cover body 221 and the material of the housing 21 are aluminum or aluminum alloy; and correspondingly, the material of the second cover body 222 may be steel or nickel.

During assembly of the battery cell 20, the electrode assembly 23 may be first placed into the housing 21, and the electrolyte is injected into the housing 21, and then the end cover 22 covers the opening 212 of the housing 21 so as to complete the assembly of the battery cell 20.

The housing 21 may be of various shapes, such as a cylinder, a cuboid, or a prism structure. The shape of the housing 21 can be determined based on a specific shape of the electrode assembly 23. For example, if the electrode assembly 23 is a cylindrical structure, the housing 21 may adopt a cylindrical structure; if the electrode assembly 23 is a cuboid structure, the housing 21 may adopt a cuboid structure. Certainly, the end cover 22 may alternatively adopt various structures. For example, the end cover 22 is a plate-like structure or a hollow structure with an opening at one end. Exemplarily, in FIG. 4, the housing 21 is a cuboid structure, and the end cover 22 is a plate-like structure.

Certainly, it can be understood that the battery cell 20 is not limited to the above structure, and the battery cell 20 may alternatively be another structure. For example, the battery cell 20 may include a housing 21 and two end covers 22. The housing 21 is a hollow structure with openings 212 on two opposite sides in the first direction X. One end cover 22 correspondingly covers one opening 212 of the housing 21 and forms a sealed connection, so as to form a sealed space for accommodating the electrode assembly 23 and the electrolyte. That is, the housing 21 is provided with the openings 212 on the two opposite sides, and the two end covers 22 respectively cover the two sides of the housing 21 to seal the corresponding openings 212.

In some embodiments, referring to FIGs. 3 and 4, the battery cell 20 may further include an electrode terminal 24. The electrode terminal 24 is insulatively mounted on the end cover 22, and the electrode terminal 24 is electrically connected to the electrode assembly 23 to output or input electrical energy of the battery cell 20.

It should be noted that the electrode terminal 24 is insulatively mounted on the end cover 22, that is, no electrical connection is formed between the electrode terminal 24 and the end cover 22. Certainly, in another embodiment, the electrode terminal 24 may alternatively be disposed on the housing 21.

Exemplarily, the electrode terminal 24 may be made of various materials. For example, the material of the electrode terminal 24 may be copper, iron, aluminum, steel, aluminum alloy, or the like.

In FIGs. 3 and 4, the battery cell 20 includes two electrode terminals 24. Correspondingly, each electrode assembly 23 has two tabs 231, where the two tabs 231 have opposite polarities. The two electrode terminals 24 are respectively electrically connected to the two tabs 231 of the electrode assembly 23 to achieve input or output of the positive electrode and negative electrode of the battery cell 20. It should be noted that the tab 231 of the electrode assembly 23 is a component formed by stacking and connecting regions on the positive electrode sheet uncoated with positive electrode active material layers, or a component formed by stacking and connecting regions on the negative electrode sheet uncoated with negative electrode active material layers. If the tab 231 is configured to output the positive electrode of the electrode assembly 23, the tab 231 is a component formed by stacking and connecting regions on the positive electrode sheet uncoated with positive electrode active material layers; if the tab 231 is configured to output the negative electrode of the electrode assembly 23, the tab 231 is a component formed by stacking and connecting regions on the negative electrode sheet uncoated with negative electrode active material layers.

Exemplarily, in FIGs. 3 and 4, the two electrode terminals 24 are both mounted on the end cover 22. Certainly, the structure of the battery cell 20 is not limited thereto. In another embodiment, the two electrode terminals 24 may alternatively be both mounted on the housing 21. Similarly, the two electrode terminals 24 may alternatively have one electrode terminal 24 mounted on the housing 21 and the other electrode terminal 24 mounted on the end cover 22.

In some embodiments, referring to FIG. 4, the battery cell 20 may further include a current collecting member 25. The current collecting member 25 is disposed in the accommodating cavity 211 of the housing 21, and the current collecting member 25 is connected to the electrode terminal 24 and the tab 231 of the electrode assembly 23, so as to achieve an electrical connection between the electrode assembly 23 and the electrode terminal 24, thereby reducing the assembly difficulty between the electrode terminal 24 and the tab 231 of the electrode assembly 23.

Exemplarily, the current collecting member 25 is welded to the electrode terminal 24 and the tab 231. Certainly, in another embodiment, the current collecting member 25 may alternatively abut against or be bonded to the electrode terminal 24. Similarly, the current collecting member 25 may alternatively abut against or be bonded to the tab 231.

The current collecting member 25 functions to connect the electrode terminal 24 and the tab 231 of the electrode assembly 23. The current collecting member 25 may be made of various materials. For example, the material of the current collecting member 25 may be copper, iron, aluminum, steel, aluminum alloy, or the like.

In FIG. 4, the battery cell 20 includes two electrode terminals 24 and two current collecting members 25. Correspondingly, each electrode assembly 23 has two tabs 231, where the two tabs 231 have opposite polarities. The two electrode terminals 24 are respectively electrically connected to the two tabs 231 of the electrode assembly 23 through the two current collecting members 25 to achieve input or output of the positive electrode and negative electrode of the battery cell 20.

In some embodiments, referring to FIGs. 3 and 4, the battery cell 20 may further include a pressure relief mechanism 26. The pressure relief mechanism 26 is disposed on the end cover 22, and the pressure relief mechanism 26 is configured to release internal pressure of the battery cell 20 when the internal pressure or temperature of the battery cell 20 reaches a predetermined value. Certainly, in another embodiment, the pressure relief mechanism 26 may alternatively be disposed on the housing 21.

Optionally, the pressure relief mechanism 26 and the end cover 22 may be integrally formed or separately disposed. Exemplarily, in FIG. 4, the pressure relief mechanism 26 and the end cover 22 are separately disposed, and the pressure relief mechanism 26 may be connected to the end cover 22 by welding or the like. Correspondingly, the pressure relief mechanism 26 may be a pressure relief member such as an explosion-proof valve, an explosion-proof sheet, a gas valve, a pressure relief valve, or a safety valve. Certainly, in another embodiment, the pressure relief mechanism 26 and the end cover 22 may alternatively be integrally formed, and the pressure relief mechanism 26 is a region on the end cover 22 where a weakened structure is formed, for example, a region on the end cover 22 where a score groove is formed.

In this embodiment, the end cover 22 of the battery cell 20 is provided with the first cover body 221 and the second cover body 222 stacked along the first direction X, and the first cover body 221 is configured to be connected to the housing 21 such that the end cover 22 seals the opening 212 of the housing 21. Setting the strength of the second cover body 222 to be greater than the strength of the first cover body 221 allows the end cover 22 of this structure to be provided with the second cover body 222 having higher strength on one side of the first cover body 221, thereby improving the overall structural strength of the end cover 22. When the end cover 22 has the same structural strength, the end cover 22 can be connected to the housing 21 through the first cover body 221, and the overall thickness of the first cover body 221 and the second cover body 222 of the end cover 22 after stacked in the first direction X can be optimized, thereby achieving the mutual assembly and connection between the end cover 22 and the housing 21 while satisfying the structural strength of the end cover 22, and effectively improving the space utilization of the battery cell 20 to increase the energy density of the battery cell 20.

According to some embodiments of this application, the strength of the first cover body 221 is T₁, and the strength of the second cover body 222 is T₂, satisfying T₂ - T₁ ≥ 150 MPa.

Optionally, the strength of the second cover body 222 may be greater than the strength of the first cover body 221 by 150 MPa, 160 MPa, 180 MPa, 200 MPa, 250 MPa, 300 MPa, 350 MPa, 400 MPa, 450 MPa, 500 MPa, 600 MPa, 700 MPa, 800 MPa, 900 MPa, or the like.

Exemplarily, the material of the first cover body 221 is aluminum or aluminum alloy. Correspondingly, the material of the second cover body 222 may be steel, nickel, or the like.

In these embodiments, the strength of the second cover body 222 is set to be at least 150 MPa greater than the strength of the first cover body 221, so that the strength of the second cover body 222 can be further improved while achieving the connection between the first cover body 221 and the housing 21, thereby further reducing the space occupied by the first cover body 221 and the second cover body 222 in the first direction X when the end cover 22 has the same structural strength, and helping to further improve the space utilization of the battery cell 20 to increase the energy density of the battery cell 20.

According to some embodiments of this application, referring to FIGs. 6 and 7, along the first direction X, the first cover body 221 has a first surface 2211 facing the second cover body 222. A first abutting portion 2212 is disposed on the first surface 2211 in a protruding manner, where the first abutting portion 2212 surrounds an outer side of the second cover body 222. An outer peripheral surface of the first abutting portion 2212 abuts against an inner peripheral surface of the housing 21.

The first cover body 221 has the first surface 2211 facing the second cover body 222, that is, a surface of the first cover body 221 facing the second cover body 222 and in contact with the second cover body 222 is the first surface 2211.

The first abutting portion 2212 is disposed on the first surface 2211 in a protruding manner, and the first abutting portion 2212 surrounds the outer side of the second cover body 222. That is, the first abutting portion 2212 is connected to the first surface 2211, and the first abutting portion 2212 is an annular structure surrounding the second cover body 222, so that the second cover body 222 is located on an inner side of the first abutting portion 2212.

The outer peripheral surface of the first abutting portion 2212 abuts against the inner peripheral surface of the housing 21, that is, an outer peripheral side of the first abutting portion 2212 abuts against an inner surface of the housing 21 facing the accommodating cavity 211.

It should be noted that the first cover body 221 and the first abutting portion 2212 may be integrally formed, that is, the first cover body 221 and the first abutting portion 2212 are formed as an integrated structure. The first cover body 221 and the first abutting portion 2212 may be manufactured by integral forming processes such as stamping, casting, bending, or milling. Certainly, the first cover body 221 and the first abutting portion 2212 may alternatively be separately disposed, that is, the first cover body 221 and the first abutting portion 2212 are separated. The first abutting portion 2212 may be connected to the first surface 2211 of the first cover body 221 through structures such as welding connection, bolt connection, or bonding.

In these embodiments, the first abutting portion 2212 is disposed on the first surface 2211 of the first cover body 221 in a protruding manner, the outer peripheral surface of the first abutting portion 2212 abuts against the inner peripheral surface of the housing 21, and the first abutting portion 2212 is a structure surrounding the outer side of the second cover body 222, so that the end cover 22 of this structure can further increase a contact area between the first cover body 221 and the housing 21 without increasing the thickness of the first cover body 221 and the second cover body 222 stacked with each other, thereby helping to improve the structural stability and reliability of the end cover 22 assembled to the housing 21 through the first cover body 221.

According to some embodiments of this application, referring to FIGs. 6 and 7, an outer peripheral surface of the second cover body 222 abuts against an inner peripheral surface of the first abutting portion 2212, that is, the outer peripheral side of the second cover body 222 and the inner peripheral side of the first abutting portion 2212 are structures abutting against each other.

In these embodiments, the outer peripheral surface of the second cover body 222 is configured as a structure abutting against the inner peripheral surface of the first abutting portion 2212, so that the structural stability of the second cover body 222 assembled to an inner side of the first abutting portion 2212 can be improved, and the second cover body 222 can also provide certain support for the first abutting portion 2212, thereby improving the structural stability of the outer peripheral surface of the first abutting portion 2212 abutting against the inner peripheral surface of the housing 21, and helping to alleviate the phenomenon of deformation of the first abutting portion 2212.

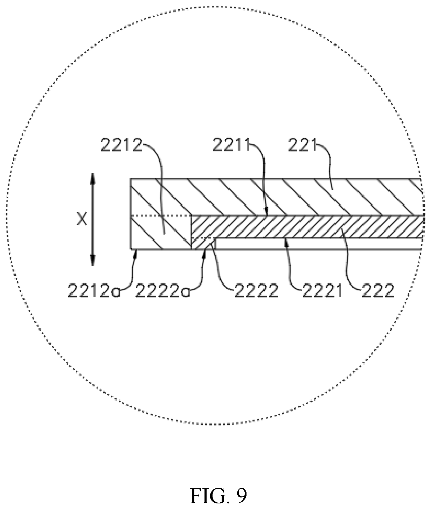

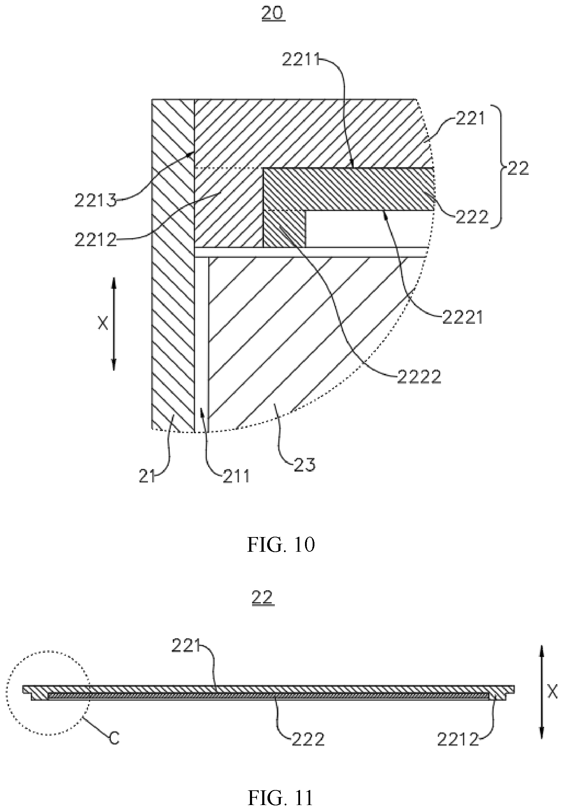

According to some embodiments of this application, referring to FIGs. 8, 9, and 10, FIG. 8 is a cross-sectional view of an end cover 22 of a battery cell 20 according to some other embodiments of this application, FIG. 9 is a partially enlarged view of part B of the end cover 22 shown in FIG. 8, and FIG. 10 is a partial cross-sectional view of a battery cell 20 according to some other embodiments of this application. Along the first direction X, the second cover body 222 has a second surface 2221 facing away from the first cover body 221. A second abutting portion 2222 is disposed on the second surface 2221 in a protruding manner, where the second abutting portion 2222 is an annular structure extending along a circumferential direction of the first abutting portion 2212. An outer peripheral surface of the second abutting portion 2222 abuts against the inner peripheral surface of the first abutting portion 2212.

The second cover body 222 has the second surface 2221 facing away from the first cover body 221, that is, a surface of the second cover body 222 facing away from a side of the first cover body 221 in the first direction X and not in contact with the first cover body 221 is the second surface 2221.

The second abutting portion 2222 is disposed on the second surface 2221 in a protruding manner, the second abutting portion 2222 is the annular structure extending along the circumferential direction of the first abutting portion 2212, and the outer peripheral surface of the second abutting portion 2222 abuts against the inner peripheral surface of the first abutting portion 2212. That is, the second abutting portion 2222 is an annular structure connected to the second surface 2221, and an outer peripheral side of the second abutting portion 2222 abuts against the inner peripheral side of the first abutting portion 2212. That is, the outer peripheral surface of the second abutting portion 2222 is flush with the outer peripheral surface of the second cover body 222, and the outer peripheral surface of the second abutting portion 2222 and the outer peripheral surface of the second cover body 222 jointly define a surface abutting against the inner peripheral surface of the first abutting portion 2212. In addition, the second surface 2221 of the second cover body 222 and the inner peripheral surface of the second abutting portion 2222 jointly define a groove capable of accommodating other components.

It should be noted that the second cover body 222 and the second abutting portion 2222 may be integrally formed, that is, the second cover body 222 and the second abutting portion 2222 are formed as an integrated structure. The second cover body 222 and the second abutting portion 2222 may be manufactured by integral forming processes such as stamping, casting, bending, or milling. Certainly, the second cover body 222 and the second abutting portion 2222 may alternatively be separately disposed, that is, the second cover body 222 and the second abutting portion 2222 are separated. The second abutting portion 2222 may be connected to the second surface 2221 of the second cover body 222 through structures such as welding connection, bolt connection, or bonding.

In these embodiments, the second abutting portion 2222 of the annular structure is disposed on the second surface 2221 of the second cover body 222 in a protruding manner, and the outer peripheral surface of the second abutting portion 2222 abuts against the inner peripheral surface of the first abutting portion 2212, so that a contact area between the second cover body 222 and the inner peripheral surface of the first abutting portion 2212 can be increased through the second abutting portion 2222 without increasing the thickness of the first cover body 221 and the second cover body 222 stacked with each other, thereby further improving the supporting effect of the second cover body 222 on the first abutting portion 2212, further improving the structural stability of the outer peripheral surface of the first abutting portion 2212 abutting against the inner peripheral surface of the housing 21, and further alleviating the phenomenon of deformation of the first abutting portion 2212.

According to some embodiments of this application, referring to FIG. 9, along the first direction X, the first abutting portion 2212 has a first end surface 2212a facing away from the first surface 2211, the second abutting portion 2222 has a second end surface 2222a facing away from the second surface 2221, and the second end surface 2222a is flush with the first end surface 2212a.

The second end surface 2222a being flush with the first end surface 2212a means that an end of the first abutting portion 2212 away from the first surface 2211 in the first direction X is flush with an end of the second abutting portion 2222 away from the second surface 2221 in the first direction X, that is, the first end surface 2212a and the second end surface 2222a are coplanar structures.

In these embodiments, the first end surface 2212a of the first abutting portion 2212 facing away from the first surface 2211 is configured as a structure flush with the second end surface 2222a of the second abutting portion 2222 facing away from the second surface 2221, so that a contact area between the first abutting portion 2212 and the second abutting portion 2222 can be further increased, thereby improving the supporting effect of the second cover body 222 on the first abutting portion 2212. In addition, the phenomenon of space waste of the battery cell 20 caused by the second abutting portion 2222 protruding from the first end surface 2212a can be effectively alleviated.

In some embodiments, referring to FIGs. 6 and 9, the second cover body 222 and the second abutting portion 2222 are integrally formed, that is, the second cover body 222 and the second abutting portion 2222 are formed as an integrated structure. The second cover body 222 and the second abutting portion 2222 may be manufactured by integral forming processes such as stamping, casting, bending, or milling. It should be noted that when the second cover body 222 and the second abutting portion 2222 are formed by a bending process, an outer edge of a plate of a plate-like structure is bent to one side along its thickness direction, such that a bent portion forms the second abutting portion 2222, and an unbent portion is the second cover body 222.

In these embodiments, the second cover body 222 and the second abutting portion 2222 are configured to be integrally formed, helping to improve the structural strength and structural stability between the second cover body 222 and the second abutting portion 2222, thereby reducing the risk of mutual separation between the second abutting portion 2222 and the second cover body 222.

In some embodiments, still referring to FIGs. 6 and 9, the inner peripheral surface of the first abutting portion 2212 is parallel to the first direction X.

In these embodiments, the inner peripheral surface of the first abutting portion 2212 is configured as a structure parallel to the first direction X, facilitating the assembly of the second cover body 222 to the inner side of the first abutting portion 2212 along the first direction X, helping an outer peripheral surface of the first cover body 221 to abut against the inner peripheral surface of the first abutting portion 2212, and helping to reduce the assembly difficulty between the second cover body 222 and the first cover body 221, thereby improving the production efficiency of the battery cell 20.

According to some embodiments of this application, referring to FIGs. 7 and 10, the outer peripheral surface of the first cover body 221 abuts against the inner peripheral surface of the housing 21, that is, an outer peripheral side of the first cover body 221 abuts against the inner surface of the housing 21 facing the accommodating cavity 211, so that the first cover body 221 is a structure embedded in the housing 21.

In these embodiments, the outer peripheral surface of the first cover body 221 abuts against the inner peripheral surface of the housing 21, so that the outer peripheral surfaces of the first cover body 221 and the first abutting portion 2212 are both structures abutting against the inner peripheral surface of the housing 21, thereby further improving the stability and reliability of the mutual assembly and connection between the first cover body 221 and the housing 21.

According to some embodiments of this application, still referring to FIGs. 7 and 10, the outer peripheral surface of the first cover body 221 is flush with the outer peripheral surface of the first abutting portion 2212. The outer peripheral surface of the first cover body 221 and the outer peripheral surface of the first abutting portion 2212 jointly form a welding surface 2213. The welding surface 2213 is welded to the inner peripheral surface of the housing 21.

The outer peripheral surface of the first cover body 221 is flush with the outer peripheral surface of the first abutting portion 2212, that is, the outer peripheral surface of the first cover body 221 and the outer peripheral surface of the first abutting portion 2212 are coplanar structures, so that the outer peripheral surface of the first cover body 221 and the outer peripheral surface of the first abutting portion 2212 jointly form the welding surface 2213.

The welding surface 2213 is welded to the inner peripheral surface of the housing 21, that is, the outer peripheral surface of the first cover body 221 and the outer peripheral surface of the first abutting portion 2212 are both configured to be welded to the inner peripheral surface of the housing 21, so that the first cover body 221 is connected to the housing 21 and seals the opening 212.

In these embodiments, the outer peripheral surface of the first cover body 221 and the outer peripheral surface of the first abutting portion 2212 are set to be flush with each other and jointly define the welding surface 2213 welded to the inner peripheral surface of the housing 21, so that the end cover 22 is a structure in which the first cover body 221 and the first abutting portion 2212 surrounding the outer side of the second cover body 222 are both welded to the housing 21, thereby effectively increasing an area of the welding surface 2213 between the end cover 22 and the housing 21, and allowing the first cover body 221 of the end cover 22 with reduced thickness to have a sufficient area welded to the housing 21. Thus, when the end cover 22 has the same strength, an area of a connection region between the first cover body 221 of the end cover 22 and the housing 21 can be met, and the thickness of the first cover body 221 and the second cover body 222 of the end cover 22 stacked in the first direction X can be optimized, thereby improving the reliability of the connection interface between the end cover 22 and the housing 21 and effectively improving the space utilization of the battery cell 20 while satisfying the structural strength of the end cover 22.

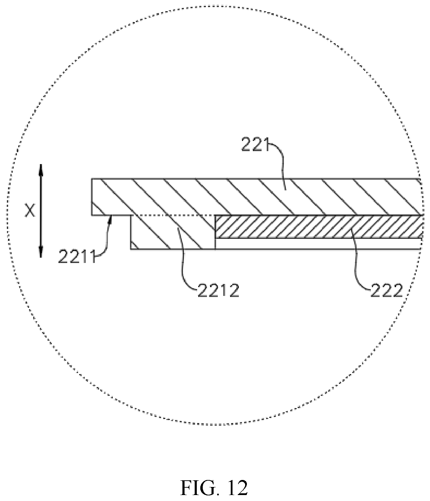

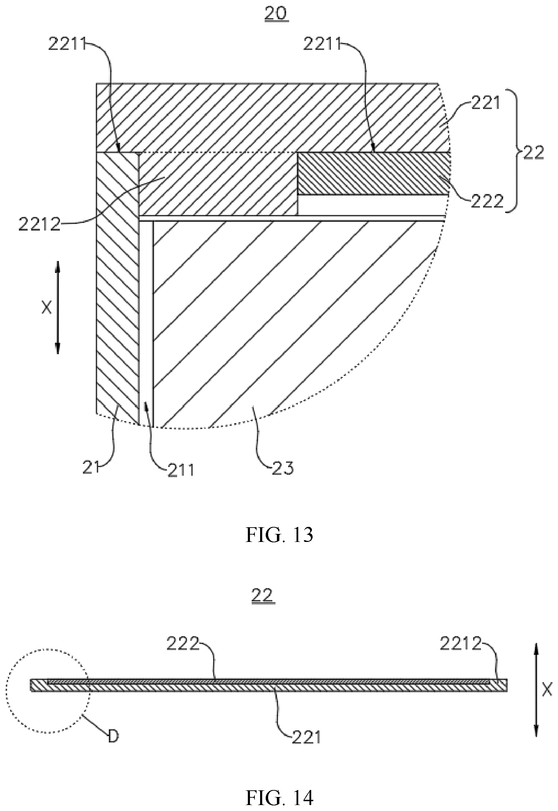

According to some embodiments of this application, referring to FIGs. 11, 12, and 13, FIG. 11 is a cross-sectional view of an end cover 22 of a battery cell 20 according to still some other embodiments of this application, FIG. 12 is a partially enlarged view of part C of the end cover 22 shown in FIG. 11, and FIG. 13 is a partial cross-sectional view of a battery cell 20 according to still some other embodiments of this application. Along the first direction X, an end of the housing 21 provided with the opening 212 is provided with a third end surface 213, and the third end surface 213 is connected to the inner peripheral surface of the housing 21. Along the first direction X, the third end surface 213 faces the first surface 2211, and the third end surface 213 is connected to the first surface 2211.

The end of the housing 21 provided with the opening 212 is provided with the third end surface 213, and the third end surface 213 is connected to the inner peripheral surface of the housing 21. That is, the third end surface 213 is a surface of an end of the housing 21 provided with the opening 212, which means that the opening 212 is provided on the third end surface 213 of the housing 21, so that a wall surface of the accommodating cavity 211 in communication with the opening 212 and the third end surface 213 are structures connected to each other. That is, the third end surface 213 is connected to the inner peripheral surface of the housing 21.

The third end surface 213 faces the first surface 2211, and the third end surface 213 is connected to the first surface 2211. That is, the third end surface 213 and the first surface 2211 are structures opposite each other in the first direction X, and the third end surface 213 is connected to the first surface 2211. In other words, the first cover body 221 has a portion protruding from the outer peripheral surface of the first abutting portion 2212, so that the outer peripheral surface of the first cover body 221 and the outer peripheral surface of the first abutting portion 2212 are structures connected to each other through the first surface 2211, thereby making the outer peripheral surface of the first cover body 221, the first surface 2211, and the outer peripheral surface of the first abutting portion 2212 jointly form a stepped structure.

Optionally, various connector structures are provided between the third end surface 213 and the first surface 2211, such as welding connection or bonding.

In these embodiments, the third end surface 213 of the housing 21 and the first surface 2211 of the first cover body 221 are configured as structures facing each other and connected to each other, so that an outer edge of the first cover body 221 is a structure protruding from the outer peripheral surface of the first abutting portion 2212. This allows the end cover 22 to abut against the inner peripheral surface of the housing 21 through the first abutting portion 2212 and be connected to the third end surface 213 of the housing 21 through the first surface 2211 of the first cover body 221, thereby allowing the end cover 22 to be in contact with the housing 21 in multiple different directions, and helping to further improve the assembly reliability and structural stability between the end cover 22 and the housing 21.

In some embodiments, the third end surface 213 is welded to the first surface 2211.

In these embodiments, the third end surface 213 of the housing 21 and the first surface 2211 of the first cover body 221 are welded to each other, so that a portion of the outer edge of the first cover body 221 protruding from the outer peripheral surface of the first abutting portion 2212 is a structure welded to the housing 21, thereby helping to improve the connection strength between the first cover body 221 and the housing 21.

According to some embodiments of this application, referring to FIGs. 6, 9, and 12, the first cover body 221 and the first abutting portion 2212 are integrally formed. That is, the first cover body 221 and the first abutting portion 2212 are formed as an integrated structure. The first cover body 221 and the first abutting portion 2212 may be manufactured by integral forming processes such as stamping, casting, bending, or milling. It should be noted that when the first cover body 221 and the first abutting portion 2212 are formed by a bending process, an outer edge of a plate of a plate-like structure is bent to one side along its thickness direction, so that a bent portion forms the first abutting portion 2212, and an unbent portion is the first cover body 221.

In these embodiments, the first cover body 221 and the first abutting portion 2212 are configured to be integrally formed. This can effectively improve the structural strength and structural stability between the first cover body 221 and the first abutting portion 2212, thereby reducing the risk of mutual separation between the first abutting portion 2212 and the first cover body 221. In addition, this helps to configure the first cover body 221 and the first abutting portion 2212 as structures made of a same material, thereby facilitating the welding connection between the first cover body 221 and the first abutting portion 2212 to the housing 21.

According to some embodiments of this application, referring to FIGs. 7, 10, and 13, along the first direction X, the second cover body 222 is located on the side of the first cover body 221 facing the accommodating cavity 211. That is, the first surface 2211 of the first cover body 221 is a structure facing the accommodating cavity 211 and the electrode assembly 23. In other words, in the first direction X, the second cover body 222 is closer to the electrode assembly 23 than the first cover body 221.

In these embodiments, the second cover body 222 is configured to be located on the side of the first cover body 221 facing the accommodating cavity 211, so that the second cover body 222 is a structure located on an inner side of the first cover body 221, thereby thinning the second cover body 222 after the first cover body 221 is connected to the housing 21 to reduce the space occupied by the end cover 22 inside the battery cell 20, and helping to improve the internal space utilization of the battery cell 20.

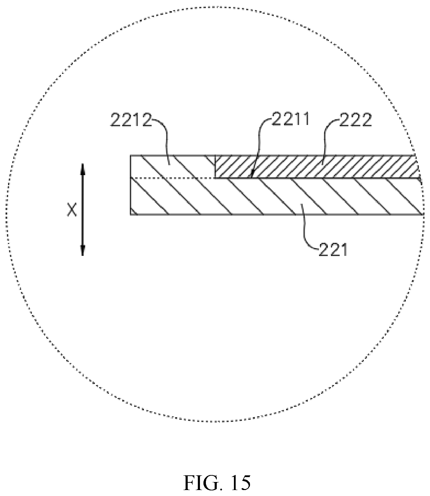

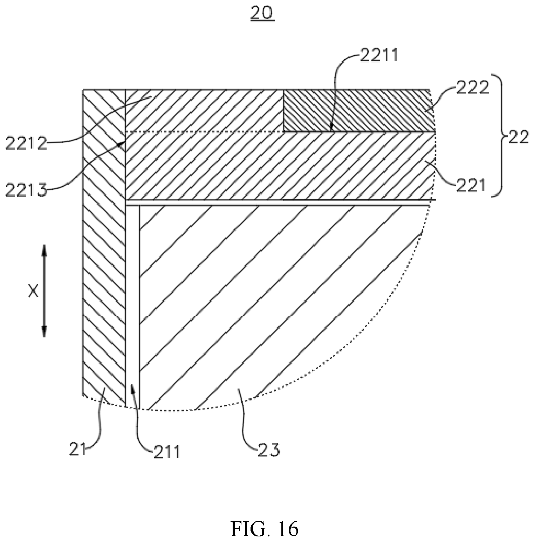

According to some embodiments of this application, referring to FIGs. 14, 15, and 16, FIG. 14 is a cross-sectional view of an end cover 22 of a battery cell 20 according to yet some other embodiments of this application, FIG. 15 is a partially enlarged view of part D of the end cover 22 shown in FIG. 14, and FIG. 16 is a partial cross-sectional view of a battery cell 20 according to yet some other embodiments of this application. Along the first direction X, the second cover body 222 is located on the side of the first cover body 221 facing away from the accommodating cavity 211. That is, the first surface 2211 of the first cover body 221 is a structure facing away from the accommodating cavity 211 and the electrode assembly 23. In other words, in the first direction X, the second cover body 222 is farther from the electrode assembly 23 than the first cover body 221.

In these embodiments, the second cover body 222 is configured to be located on the side of the first cover body 221 facing away from the accommodating cavity 211, so that the second cover body 222 is a structure located on an outer side of the first cover body 221, thereby facilitating the assembly of the second cover body 222 to the first cover body 221, and reducing the interference of the second cover body 222 on other components inside the battery cell 20 after the first cover body 221 is connected to the housing 21.

According to some embodiments of this application, the first cover body 221 is welded to the housing 21.

In these embodiments, the first cover body 221 and the housing 21 are configured as structures welded to each other, helping to improve the connection strength between the first cover body 221 and the housing 21, thereby effectively improving the structural stability and reliability of the end cover 22 assembled to the housing 21.

In some embodiments, the material of the first cover body 221 is the same as the material of the housing 21.

Exemplarily, the material of the first cover body 221 and the material of the housing 21 are both aluminum or aluminum alloy. Correspondingly, a material of the first abutting portion 2212 is the same as the material of the first cover body 221, and a material of the second abutting portion 2222 is the same as the material of the second cover body 222.

It should be noted that the material of the first cover body 221 being the same as the material of the housing 21 means that a main component of the first cover body 221 is the same as a main component of the housing 21. For example, if both the first cover body 221 and the housing 21 are made of a single material, such as aluminum, the first cover body 221 and the housing 21 are composed of a same metal element; if the first cover body 221 and the housing 21 are made of an alloy material or a mixed material, such as aluminum alloy, the materials of the first cover body 221 and the housing 21 being the same means that the main components of the first cover body 221 and the housing 21 are the same. If the first cover body 221 and the housing 21 differ only in the content of components, the first cover body 221 and the housing 21 are also made of the same material.

In these embodiments, setting the material of the first cover body 221 to be the same as the material of the housing 21 allows the first cover body 221 and the housing 21 to be structures made of the same material and welded to each other. This can reduce the welding difficulty between the first cover body 221 and the housing 21, and also reduce the phenomena such as poor welding or welding failure between the first cover body 221 and the housing 21, thereby helping to improve the welding quality between the first cover body 221 and the housing 21.

In some embodiments, the material of the first cover body 221 includes aluminum or aluminum alloy, and the material of the second cover body 222 includes steel.

Exemplarily, the material of the second cover body 222 may be SUS303 steel, SUS316 steel, SPCC steel, or the like.

In these embodiments, by setting the material of the first cover body 221 to aluminum or aluminum alloy and correspondingly setting the material of the second cover body 222 to steel can reduce the manufacturing cost of the end cover 22 and allow the strength of the second cover body 222 to be much higher than the strength of the first cover body 221, thereby further optimizing the thickness of the first cover body 221 and the second cover body 222 stacked along the first direction X when the end cover 22 has the same structural strength, and helping to further improve the space utilization of the battery cell 20.

In some embodiments, the first cover body 221 and the second cover body 222 are compositely connected to each other.

There may be various composite connection manners for the first cover body 221 and the second cover body 222. For example, the first cover body 221 and the second cover body 222 may be connected to each other through composite processes such as hot pressing or cold pressing. Certainly, in another embodiment, the first cover body 221 and the second cover body 222 may alternatively be connected to each other through manners such as bonding, bolt connection, or welding.

In these embodiments, the first cover body 221 and the second cover body 222 are connected to each other through a composite connection structure, so that the structural strength and connection stability of the first cover body 221 and the second cover body 222 can be effectively improved, thereby helping to reduce the risk of mutual separation between the first cover body 221 and the second cover body 222.

According to some embodiments of this application, this application further provides a battery 100, where the battery 100 includes the battery cell 20 according to any one of the foregoing solutions.

Referring to FIG. 2, the battery 100 may further include a box 10, and the battery cell 20 is accommodated in the box 10.

In some embodiments, the box 10 may include a first box body 11 and a second box body 12. The first box body 11 and the second box body 12 fit each other, so that the first box body 11 and the second box body 12 jointly define an assembly space for accommodating the battery cell 20.

Optionally, the second box body 12 may be a hollow structure with an opening at one end. The first box body 11 may be a plate-like structure. The first box body 11 covers an opening side of the second box body 12, so that the first box body 11 and the second box body 12 jointly define the assembly space. Alternatively, the first box body 11 and the second box body 12 may each be a hollow structure with an opening on one side. The opening side of the first box body 11 is engaged with the opening side of the second box body 12.

Of course, the box 10 formed by the first box body 11 and the second box body 12 may be of various shapes, such as a cylinder or a cuboid. Exemplarily, in FIG. 2, the box 10 is a cuboid structure.

Optionally, one or more battery cells 20 may be disposed in the box 10. Exemplarily, in FIG. 2, a plurality of battery cells 20 are disposed in the box 10 of the battery 100, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety formed by the plurality of battery cells 20 is accommodated in the box 10; or certainly, the battery 100 may alternatively be formed by a plurality of battery cells 20 being connected in series, parallel, or series-parallel first to form a battery module and then a plurality of battery modules being connected in series, parallel, or series-parallel to form an entirety which is accommodated in the box 10.

The battery 100 may further include another structure. For example, the battery 100 may further include a busbar. The busbar is connected to a plurality of battery cells 20 to achieve an electrical connection between the plurality of battery cells 20.

It should be noted that in some embodiments, the battery 100 may alternatively be not provided with the box 10. The battery 100 includes a plurality of battery cells 20. The battery 100 formed by the plurality of battery cells 20 may be directly assembled to an electric apparatus, so as to provide electrical energy to the electric apparatus through the plurality of battery cells 20. That is, the box 10 may be a part of the electric apparatus. Taking the electric apparatus being a vehicle 1000 as an example, the box 10 may be a part of a chassis structure of the vehicle 1000. For example, a part of the box 10 may become at least part of a floor of the vehicle 1000, or a part of the box 10 may become at least part of a cross beam and longitudinal beam of the vehicle 1000.

According to some embodiments of this application, this application further provides an electric apparatus. The electric apparatus includes the battery cell 20 according to any one of the foregoing solutions, and the battery cell 20 is configured to provide electrical energy for the electric apparatus.

The electric apparatus may be any device or system using the battery cell 20 described above.

According to some embodiments of this application, referring to FIGs. 3 to 10, this application provides a battery cell 20. The battery cell 20 includes a housing 21, an end cover 22, and an electrode assembly 23. An accommodating cavity 211 is formed inside the housing 21. At least one end of the accommodating cavity 211 in a first direction X is provided with an opening 212. The electrode assembly 23 is accommodated in the accommodating cavity 211. The end cover 22 is connected to the opening 212 of the housing 21 and seals the opening 212. The end cover 22 includes a first cover body 221 and a second cover body 222 stacked along the first direction X and compositely connected to each other. The second cover body 222 is disposed on a side of the first cover body 221 facing the accommodating cavity 211. Strength of the second cover body 222 is greater than strength of the first cover body 221. The strength of the first cover body 221 is T₁, and the strength of the second cover body 222 is T₂, satisfying T₂ - T₁ ≥ 150 MPa. Along the first direction X, the first cover body 221 has a first surface 2211 facing the second cover body 222. A first abutting portion 2212 is disposed on the first surface 2211 in a protruding manner. The first abutting portion 2212 and the first cover body 221 are integrally formed. A material of the first cover body 221, a material of the first abutting portion 2212, and a material of the housing 21 are the same. The first abutting portion 2212 surrounds an outer side of the second cover body 222. An outer peripheral surface of the first cover body 221 is flush with an outer peripheral surface of the first abutting portion 2212. The outer peripheral surface of the first cover body 221 and the outer peripheral surface of the first abutting portion 2212 jointly form a welding surface 2213. The welding surface 2213 is welded to an inner peripheral surface of the housing 21, so that the end cover 22 seals the opening 212 through the first cover body 221. An outer peripheral surface of the second cover body 222 abuts against an inner peripheral surface of the first abutting portion 2212. Along the first direction X, the second cover body 222 has a second surface 2221 facing away from the first cover body 221. A second abutting portion 2222 is disposed on the second surface 2221 in a protruding manner. The second abutting portion 2222 is an annular structure extending along a circumferential direction of the first abutting portion 2212. An outer peripheral surface of the second abutting portion 2222 abuts against the inner peripheral surface of the first abutting portion 2212, and the inner peripheral surface of the first abutting portion 2212 is parallel to the first direction X. Along the first direction X, the first abutting portion 2212 has a first end surface 2212a facing away from the first surface 2211, the second abutting portion 2222 has a second end surface 2222a facing away from the second surface 2221, and the second end surface 2222a is flush with the first end surface 2212a. A material of the first cover body 221 includes aluminum or aluminum alloy, and a material of the second cover body 222 includes steel.

It should be noted that, without conflict, the embodiments and features in the embodiments in this application may be combined with each other.

The above are only preferred embodiments of this application and are not intended to limit this application. For those skilled in the art, this application may have various changes and modifications. Any modifications, equivalent replacements, improvements, and the like made within the spirit and principles of this application shall fall within the protection scope of this application.

## Claims

1. A battery cell, **characterized by** comprising:
a housing internally provided with an accommodating cavity, wherein at least one end of the accommodating cavity in a first direction is provided with an opening, and the accommodating cavity is configured to accommodate an electrode assembly; and
an end cover sealing the opening;
wherein the end cover comprises a first cover body and a second cover body stacked along the first direction, the first cover body is connected to the housing to seal the opening, and strength of the second cover body is greater than strength of the first cover body.

2. The battery cell according to claim 1, **characterized in that** the strength of the first cover body is T₁, and the strength of the second cover body is T₂, satisfying T₂ - T₁ ≥ 150 MPa.

3. The battery cell according to claim 1 or 2, **characterized in that** along the first direction, the first cover body has a first surface facing the second cover body; a first abutting portion is disposed on the first surface in a protruding manner, wherein the first abutting portion surrounds an outer side of the second cover body; and an outer peripheral surface of the first abutting portion abuts against an inner peripheral surface of the housing.

4. The battery cell according to claim 3, **characterized in that** an outer peripheral surface of the second cover body abuts against an inner peripheral surface of the first abutting portion.

5. The battery cell according to claim 4, **characterized in that** along the first direction, the second cover body has a second surface facing away from the first cover body; a second abutting portion is disposed on the second surface in a protruding manner, wherein the second abutting portion is an annular structure extending along a circumferential direction of the first abutting portion; and an outer peripheral surface of the second abutting portion abuts against the inner peripheral surface of the first abutting portion.

6. The battery cell according to claim 5, **characterized in that** along the first direction, the first abutting portion has a first end surface facing away from the first surface, the second abutting portion has a second end surface facing away from the second surface, and the second end surface is flush with the first end surface.

7. The battery cell according to claim 5 or 6, **characterized in that** the second cover body and the second abutting portion are integrally formed.

8. The battery cell according to any one of claims 4 to 7, **characterized in that** the inner peripheral surface of the first abutting portion is parallel to the first direction.

9. The battery cell according to any one of claims 3 to 8, **characterized in that** an outer peripheral surface of the first cover body abuts against the inner peripheral surface of the housing.

10. The battery cell according to claim 9, **characterized in that** the outer peripheral surface of the first cover body is flush with the outer peripheral surface of the first abutting portion; the outer peripheral surface of the first cover body and the outer peripheral surface of the first abutting portion jointly form a welding surface; and the welding surface is welded to the inner peripheral surface of the housing.

11. The battery cell according to any one of claims 3 to 8, **characterized in that** along the first direction, an end of the housing provided with the opening is provided with a third end surface, and the third end surface is connected to the inner peripheral surface of the housing;
wherein along the first direction, the third end surface faces the first surface, and the third end surface is connected to the first surface.

12. The battery cell according to claim 11, **characterized in that** the third end surface is welded to the first surface.

13. The battery cell according to any one of claims 3 to 12, **characterized in that** the first cover body and the first abutting portion are integrally formed.

14. The battery cell according to any one of claims 1 to 13, **characterized in that** along the first direction, the second cover body is located on a side of the first cover body facing the accommodating cavity.

15. The battery cell according to any one of claims 1 to 13, **characterized in that** along the first direction, the second cover body is located on a side of the first cover body facing away from the accommodating cavity.

16. The battery cell according to any one of claims 1 to 15, **characterized in that** the first cover body is welded to the housing.

17. The battery cell according to claim 16, **characterized in that** a material of the first cover body is the same as a material of the housing.

18. The battery cell according to any one of claims 1 to 17, **characterized in that** a material of the first cover body comprises aluminum or aluminum alloy, and a material of the second cover body comprises steel.

19. The battery cell according to any one of claims 1 to 18, **characterized in that** the first cover body and the second cover body are compositely connected to each other.

20. A battery, **characterized by** comprising the battery cell according to any one of claims 1 to 19.

21. An electric apparatus, **characterized by** comprising the battery cell according to any one of claims 1 to 19, wherein the battery cell is configured to provide electrical energy.
